**Europäisches Patentamt**

**European Patent Office**

**Office européen des brevets**

(19)

(11) Publication number : **0 414 129 B1**

(12) **EUROPEAN PATENT SPECIFICATION**

(45) Date of publication of patent specification :
02.11.94 Bulletin 94/44

(51) Int. Cl.⁵ : **H02K 1/30, H02K 1/28, H02K 1/26, H02K 15/02, H02K 17/42**

(21) Application number : 90115693.5

(22) Date of filing : 16.08.90

(54) **Electric rotary machine, method for producing the same and hydro-electric power installation with the machine.**

(30) Priority : 16.08.89 JP 210079/89

(43) Date of publication of application :
27.02.91 Bulletin 91/09

(45) Publication of the grant of the patent :
02.11.94 Bulletin 94/44

(84) Designated Contracting States :
DE FR SE

(56) References cited :
CH-A- 612 803
FR-E- 17 767
US-A- 2 157 046
US-A- 2 539 730
PATENT ABSTRACTS OF JAPAN vol. 12, no.
94 (E-593) 26 March 1988 & JP-A-62 225 141
(HITACHI) 3 October 1987
PATENT ABSTRACTS OF JAPAN vol. 9, no.
197 (E-335) 14 August 1985 & JP-A-60 062 840
(HITACHI) 11 April 1985
PATENT ABSTRACTS OF JAPAN vol. 2, no. 70
(E-036) 26 May 1978 & JP- A-53 035 901 (TOSHI-
BA) 3 April 1978

(73) Proprietor : HITACHI, LTD.
6, Kanda Surugadai 4-chome
Chiyoda-ku, Tokyo 101 (JP)
Proprietor : THE KANSAI ELECTRIC POWER
CO., INC.
3-22, Nakanoshima-3-chome
Kita-ku
Osaka-shi, Osaka 530 (JP)

(72) Inventor : Tsuji, Eiji
1-1, Jonancho-4-chome
Hitachi-shi (JP)
Inventor : Nagura, Osamu
12-4, Ushirono-2-chome
Katsuta-shi (JP)
Inventor : Kayukawa, Shigehiro
1-26, Jonancho-3-chome
Hitachi-shi (JP)
Inventor : Yasaka, Yasuhiro
4-5, Takasuzucho-5-chome
Hitachi-shi (JP)
Inventor : Hagiya, Koshi
1470-1, Kandacho
Hitachi-shi (JP)
Inventor : Hakuta, Shinsaku
2-14, Higashicho-1-chome
Hitachi-shi (JP)
Inventor : Kita, Eizo
14-3-502, Kawahigashicho,
Fushimi-ku
Kyoto-shi (JP)
Inventor : Nakagawa, Hiroto
1-16-201, Wakayamadai-2-chome
Shimamotocho, Mishima-gun, Osaka (JP)
Inventor : Oono, Yasuteru
4-3, Kimikagecho-6-chome,
Kita-ku
Kobe-shi (JP)
Inventor : Kuzusaka, Satoshi
1-1, Baika-3-chome, Konohana-ku
Osaka-shi (JP)

(74) Representative : Patentanwälte Beetz - Timpe -
Siegfried Schmitt-Fumian - Mayr
Steinsdorfstrasse 10
D-80538 München (DE)

## Description

## BACKGROUND OF THE INVENTION

This invention relates generally to an electric rotating or rotary machine and a method for producing the same, and more specifically to a large-capacity, high-speed electric rotating machine of the vertical shaft type, and more particularly to a large-capacity, high-speed, variable-speed induction generator/motor of the vertical shaft-type (hereinafter referred to simply as "variable-speed generator") which is driven by a water (hydraulic) turbine. This invention relates to a hydro-electric power installation with the variable-speed generator as well.

A wound-rotor induction generator of the secondary excitation type per se is well known in the art. As described in "Electrical Engineering Handbook, chapter 11, Section 6", such a wound-rotor induction generator is of the type in which exciting or energizing current of a slip frequency is caused to flow through a secondary circuit thereof so as to derive electric power from a primary winding thereof. Usually, the current for exciting the secondary circuit is supplied from a separate low-frequency generator or a separate rectifier-type frequency converter for low-frequency.

When the wound-rotor induction generator of the secondary excitation or energizing type is driven by a motor with the above exciter directly connected to the induction generator, the exciting frequency varies in accordance with variations of the rotational speed of the shaft even if this rotation speed varies, and therefore voltage of a fixed frequency is induced in the primary winding.

Therefore, features of the wound-rotor induction generator of the secondary excitation type are well achieved, when the generator is directly connected to the motor, such as a propeller water turbine, whose efficiency is enhanced when the rotational speed is varied in accordance with the power.

The capacity of a typical example of conventional variable-speed generators of the secondary excitation type is about 7.5 MW at the maximum, and is much smaller than the capacity of a salient-pole synchronous generator commonly used in a hydro-electric power station. Therefore, despite the above advantageous features, examples of application of the variable-speed generator of the secondary excitation type to a hydro-electric power station connected to an ordinary power system have been limited. One reason for such limited application is that it has been difficult to ensure the mechanical strength because of the structure of the electric machine.

Recently, it has been proposed that a salient-pole synchronous generator should be replaced by a variable-speed generator in existing hydro-elecrtric power stations of a large capacity, and that a variable-speed generator should be installed from the beginning in a hydro-electric power station of a large capacity to be newly built.

The advantage or characteristics of the use of the variable-speed generator is that the adjustment between the active power and the reactive power can be effected without being influenced by the rotational speed of the electric machine, and when the electric machine is connected to a power system, the electric machine stabilizes the power system, making use of its characteristics.

However, in order to make effective use of the above characteristics when the hydro-electric power station equipped with such a variable-speed generator is connected to the system, the generator is required to achieve a high-speed operation and to have a large capacity.

However, to achieve such a high-speed and large-capacity construction or structure leads to an increased size of the structure of the electric machine. Therefore, if the electric machine is designed in a manner much similar to that of the conventional electric machines, component parts of the electric machine do not meet the required mechanical strengths for the high-speed rotation of a rotor. Thus, a practical use of such electrical machine has been impossible.

For example, in the case of this type of electric machine of 400 MVA and 400 rpm, it is considered that the outer diameter of a rotor is about 6 m. Further, in such an electric machine, a large current must be supplied to a winding provided on the rotor, and therefore clearly the winding is increased in size and weight. From these, it is considered that the acceleration at the outer peripheral portion of the rotor is about 1000 G, where "G" is the gravitational acceleration.

In the case of the rotor subjected to such a large acceleration (that is, centrifugal force), it is necessary that the mechanical strength of each portion of the rotor should be increased by one order or rank as compared with that of the rotor of the conventional induction generator of the secondary excitation type. Even if only the requirement for the mechanical strength is met, this is insignificant unless electrical and magnetical efficiencies are satisfied, because the machine concerned is an electric machine. Further, the above problem must be dealt with, taking an effective cooling into consideration.

Further, the achievement of a large capacity of the electric machine necessarily leads to an increased size of the structure, and the problems of manufacture, assemblage and transport resulting from such a construction or structure must be solved.

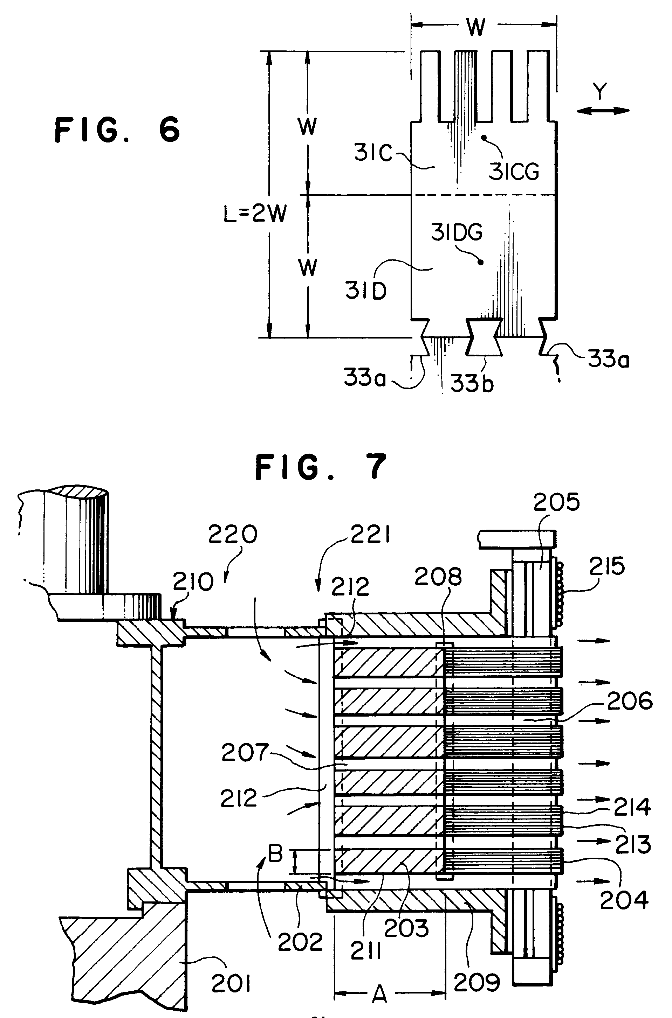

To meet such a demand, as shown in Fig. 7, there has already been proposed an electric rotating machine 221 of a large capacity in Japanese Laid-Open (Kokai) Patent Application No. 62-225141. This electric rotating machine 221 comprises a rotor 220 including a spider arm 210 having a rotatable shaft body 201 and arms 202 fixedly mounted on the shaft body 201, a rotor rim 203 fixedly mounted on the outer periphery of the spider arm 210, a laminated or stacked core 204 fixedly mounted on the outer periphery of the rotor rim 203, and a rotor winding 215 mounted on the laminated core 204.

In the rotor 220 of the electric rotating machine 221, the rotor rim 203 is composed of a plurality of annular plate-like rim members 211 arranged in the axial direction. The width A of the rim member 211 in the radial direction is greater than its thickness B in the axial direction. The rim members 211 are fixed to the distail ends of the arms 202 of the spider arm 210 through detachable connecting keys 212. Radial air ducts 207 are formed between any two adjacent ones of the rim members 211. The laminated or stacked core 204 comprises a plurality of laminates 214 each composed of a number of laminated core segments 213, the laminates 214 being arranged together through radial air ducts 206. Each of the air ducts 206 communicates at its inner end with the outer end of a respective one of the air ducts 207. The axial height of each duct 207 is greater than the axial height of each duct 206. The laminated core 204 is detachably secured at its inner periphery to the outer periphery of the rotor rim 203 by connecting keys 208. In Fig. 7, reference numeral 205 denote the end of the winding 215, and reference numeral 209 denotes a clamping end plate.

In the rotor 220, the spider arm 210, the rotor rim 203 and the laminated core 204 are releaseably connected to one another by the connecting keys 212 and 208, and therefore during the manufacture and transport, these parts 210, 203 and 204 are handled as separate parts. Also, since the rotor rim 203 is composed of the plurality of relatively thin rim members 211, the rotor rim 203 can be easily handled during the manufacture and transport. If the radial dimension of the rim member 211 is large, a large inertia is produced. Further, in response to the rotation of the rotor 220, there is produced streams of cooling air each passing through the two mating air ducts 206 and 207, and therefore the rotor 220 can be cooled from the inside thereof, thereby preventing overheat of the electric rotating machine caused by the large-capacity design thereof.

However, in this conventionally-proposed electric rotating machine 221, the improvements are concentrated almost all on the provision of the rotor rim 203 composed of the laminated rim members 211 and also on the cooling of the rotor 220, and the arrangement of the laminated core 204 necessitated by the provision of the large-diameter rotor rim 203 has not been sufficiently improved from the viewpoint of the mechanical strength and energy conversion efficiency to meet the large-size and large-capacity construction of the electric rotating machine 221. Therefore, such an electric rotating machine of large size and capacity has not been fully practical.

## SUMMARY OF THE INVENTION

With the above problems in view, it is an object of this invention to provide an electric rotating machine of the vertical shaft type (whose rotation shaft is substantially vertical) which has such an increased mechanical strength as to meet a large-size and high rotational-speed construction or structure of the machine.

This object has been achieved by an electric rotating or rotary machine comprising:

a rotor including a substantially vertical shaft provided at a center of the rotor, a laminated or stacked core fixed to the shaft and disposed at an outer peripheral portion of the rotor, and a winding covered with dielectric material and inserted in slot grooves formed in an outer peripheral portion of the laminated core; and

a stator including a stator core disposed around the outer periphery of the rotor to be opposed to the rotor through a gap therebetween, and a stator winding mounted on the stator core;

the rotor further comprising a spider arm composed of the shaft and arm portions which are fixedly mounted on the shaft and extend radially outwardly from the shaft, and an annular or doughnut-shaped rotor rim fixedly mounted on distal ends of the arm portions of the spider arm;

the laminated core being fixedly mounted on an outer periphery of the rotor rim, the laminated core having laminated layers, each of the layers being composed of a plurality of fan-shaped thin core plates of steel arranged in an annular shape, and each core plate having the slot grooves formed in an outer periphery thereof;

the rotor rim having a stack of rim members each made of an annular thick steel plate each rim member having engaging grooves formed in an outer periphery thereof at equal intervals, the core plate having core engaging grooves opposed to the rim engaging grooves, respectively, in such a manner that the number of complete core engaging grooves is two, and a connecting key being fitted in each mating pair of the core engaging groove and the rim engaging groove to fix the laminated or stacked core to the rotor rim, the connecting key extending in an axial direction of the rotor; and

the following relation being established:

$$0.5 \times L \leqq W \leqq 2.0 \times L$$

where "W" represents a width (length) of the fan-shaped core plate along the outer periphery thereof, and "L" represents a width of the fan-shaped core plate extending between its inner and outer peripheries.

In this electric rotating machine, since each core plate is connected to the rotor rim through the complete core engaging grooves the number of which is two, there is little risk that stresses acting on the core engaging grooves are concentrated on one core engaging groove. Further, the core plate is not unduly long both in the peripheral and radial directions, and therefore there is little risk that the force acting on the core plate is unduly uneven or non-uniform as later described in detail in the following preferred embodiment of the invention, however, under general or unlimited conditions. The reason that the rotor rim is of an integral doughnut-shaped (annular) construction is to make the rotor rim isotropic around the rotation shaft, thereby preventing the shaking of the rotor rim due to a centrifugal force of the laminated core or other parts. In the electric rotating machine of the above construction or structure the rotor rim comprise a plurality of doughnut-shaped rim members, and the laminated core comprises a number of fan-shaped core plates, and therefore the manufacture or structure, assemblage and transport can be effected easily.

According to a preferred embodiment of the invention, the core engaging grooves of the core plate are defined by two half grooves provided respectively at opposite peripheral sides of the fan-shaped core plate and one full or complete groove provided at a peripheral central portion of the core plate. With this structure or construction, there is little risk that stresses acting on the core engaging grooves are concentrated on one core engaging groove.

According to a preferred embodiment of the invention, the following relation is established:

$$0.5\ (W_t \times N_{SP}) \leqq H_{CB} \leqq 2.0\ (W_t \times N_{SP})$$

where "$W_t$" represents an area of a peripheral surface of a tooth of the laminated core lying between two adjacent slot grooves, "$N_{SP}$" represents the number of the teeth included in one magnetic pole defined by the connection of the winding inserted n the slot grooves, and "$H_{CB}$" represents a vertical cross-sectional area of a core back portion of the laminated core, extending from bottoms of the slot grooves to bottoms of the core engaging grooves, along a diametrical line of the core back portion.

With this structure of construction, an undue heating of the laminated core is prevented, and magnetic flux leakage from the core back portion is restrained, thereby keeping high electrical and magnetical efficiencies as later described in detail in the following preferred embodiment of the invention, however, under general or unlimited conditions.

According to a further preferred embodiment of the invention, each of the annular rim members of the rotor rim has a thickness of 30 to 90 mm. The thickness of the rim member is determined in view of the mechanical strength required for supporting the laminated core and mainly in view of the cooling effect achieved by the cooling air passing between the adjacent rim members so as to prevent the over-heating of the laminated core.

According to a further preferred embodiment of the invention, the rim members are laminated or stacked axially of the rotor in such a manner that first air ducts are formed between two adjacent rim members for passing air radially therethrough, the core plates being laminated in such a manner that second air ducts are formed substantially in registry with the first air ducts. With this arrangement of the first and second air ducts, the cooling of the rotor can be performed effectively. The air ducts of the rotor rim are formed, using spacers interposed between the adjacent rim members, and preferably, the height (axial length) of the air duct of the rotor rim is not more than 20 mm in view of the buckling strength of the spacer.

According to a further preferred embodiment of the invention, the rotor rim and the laminated or stacked core have respective holes through which bolts are passed to clamp the rotor rim and the laminated core in the direction of the laminate or stack thereof, and mating ones of the holes and each mating pair of the rim engaging groove and the core engaging groove receiving the connecting key being disposed or aligned on a common radial line of the rotor. With this arrangement, the flow resistance of the passage of the cooling air can be made less than that in a case where they are not aligned in common radial lines, and therefore the cooling of the rotor can be performed effectively.

According to a further preferred embodiment of the invention, there are provided abutment plates respectively holding end surfaces of the rotor rim directed in its laminated direction, as well as end surfaces of the laminate or stack core directed in its laminated direction, each of endmost ones of the rim members abutted respectively against the abutment plates having a relief portion at its outer peripheral portion, so that when the rotor rim is clamped by bolts through clamp plates, compressive forces can be applied to the laminated core in its laminated direction, with a radially outer periphery of the contact area between the rotor rim and each of the abutment plates serving as a fulcrum or support point. With this construction or structure, the strength of holding the core plate can be increased

According to a further preferred embodiment of the invention, an outer peripheral portion of the clamp plate overlaps and engages an inner peripheral portion of a coil clamp, and is clamped by the bolts. With this structure or construction, the core plates and the rim members of the rotor rim are firmly clamped together at the same time.

According to a further preferred embodiment of the invention, the arm portions of the spider arm are fixed to the shaft by welding, the electric rotary machine being of the variable-speed type. With this structure or construction, a large space for flowing the cooling air can be obtained while maintaining a sufficient mechanical strength at the inner peripheral portion of the rotor, and therefore the cooling of the rotor can be performed effectively.

According to a further preferred embodiment of the invention, there is provided a hydro-electric power installation provided with the above electric rotating machine, comprising: a water turbine having a shaft connected coaxially to the shaft of the rotor; and a thrust bearing through which the rotor is supported; the rotor having a fly wheel effect required by the water turbine, the rotor being rotatable at a peripheral speed of at least 100 m/sec. Such an operation is made possible, because of the provision of the thrust bearing and of the particular structure or construction of the spider arm, the rotor rim and the laminated core. Preferably, the thrust bearing is provided on an intermediate shaft which is disposed between and interconnects the shaft of the water turbine and the shaft of the rotor.

Another object of the present invention is to provide a method for producing an electric rotating or rotary machine of the vertical shaft type (whose rotation shaft is substantially vertical) which has such an increased mechanical strength as to meet a large-size and high rotational-speed structure or construction of the machine, and can enhance electric and magnetical energy conversion efficiencies.

This object can be achieved by a method of producing an electric rotating machine including a rotor having a substantially vertical shaft provided at a center of the rotor, a laminated core fixed to the shaft and disposed at an outer peripheral portion of the rotor, and a winding covered with dielectric material and inserted in slot grooves formed in an outer peripheral portion of the laminated core; and a stator having a stator core disposed around the outer periphery of the rotor to be opposed to the rotor with a gap therebetween, and a stator winding mounted on the stator core; the method comprising the steps of:

welding arm portions to the shaft in such a manner that the arm portions extend radially outwardly from the shaft, thereby forming a spider arm;

laminating rim members of an annular thick steel plate in the axial direction of the shaft and fixing the rim members to distail ends of the arm portions of the spider arm in such a manner that air ducts for passing air radially therethrough are formed, thereby forming a rotor rim, the rim member having rim engaging grooves formed at its outer peripheral at equal intervals; and

laminating fan-shaped core plates in an annular shape around an outer periphery of the rotor rim to thereby form a laminated core, each of the fan-shaped core plates being stamped from a thin steel plate, the core plate having at its outer periphery the slot grooves and having at its inner periphery core engaging grooves opposed to the rim engaging grooves, respectively, the core plate having such dimensions as to satisfy the following relation:

$$0.5 \times L \leqq W \leqq 2.0 \times L$$

where "W" represents a width (length) along the outer periphery of the fan-shaped core plate, and "L" represents a width of the fan-shaped core plate extending between its inner and outer peripheries;

the laminated core being so constructed as to satisfy the following relation:

$$0.5 \, (Wt \times N_{SP}) \leqq H_{CB} \leqq 2.0 \, (Wt \times N_{SP})$$

where "Wt" represents an area of a peripheral surface of a tooth of the laminated core lying between two adjacent slot grooves, "$N_{SP}$" represents the number of the teeth included in one magnetic pole defined by the connection of the winding inserted in the slot grooves, and "$H_{CB}$" represents a vertical cross-sectional area of a core back portion of the laminated core, extending from bottoms of the slot grooves to bottoms of the core engaging grooves, along a diametrical line of the core back portion.

The objects, features as well as advantages of the invention will be made clearer from the following description of preferred embodiments of the invention referring to the drawings.

BRIEF DESCRIPTION OF THE DRAWINGS

Fig. 1 is a partially broken sectional, side-elevational view showing the relation between a variable-speed generator of the vertical shaft-type according to a preferred embodiment of the present invention and a water turbine;
Fig. 2 is a sectional view of a portion of a rotor of the variable-speed generator of Fig. 1;
Fig. 3 is an enlarged sectional view of a portion of the rotor of Fig. 2;
Fig. 4 is a sectional view taken along the line IV-IV of Fig. 3;
Fig. 5 is a schematic plan view of a core plate having a shape defined by W = 2L;
Fig. 6 is a schematic plan view of a core plate having a shape defined by W = 0.5L; and
Fig. 7 is a sectional view of a rotor of a conventional electric rotating machine.

DESCRIPTION OF THE PREFERRED EMBODIMENT OF THE INVENTION

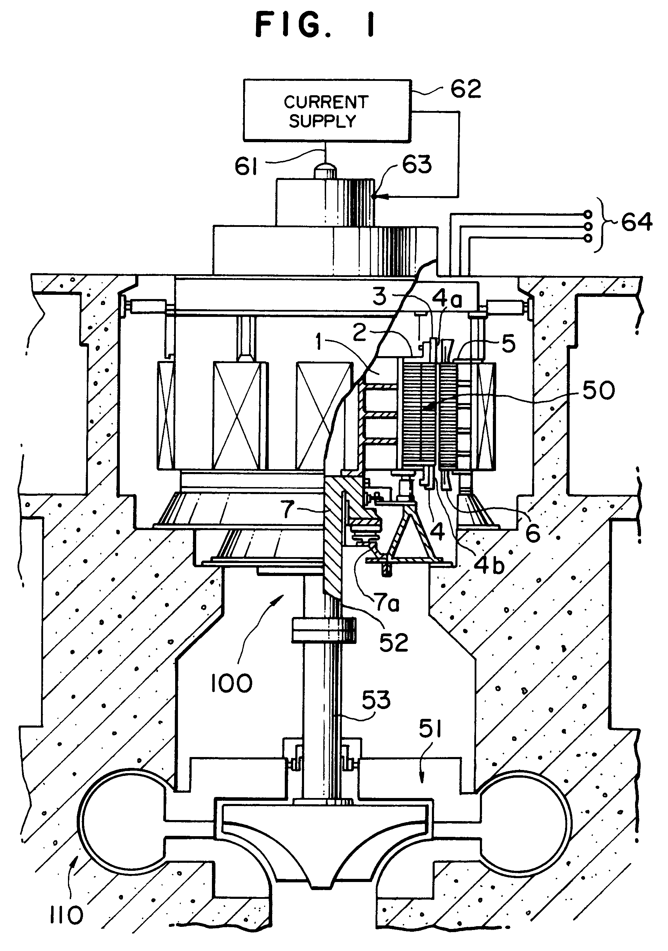

Fig. 1 schematically shows the construction of a pumping-up hydro-electric power installation 110 having a variable-speed generator 100 of the vertical shaft type according to a preferred embodiment of the invention. A rotor 50 of the generator 100 is connected to a water turbine 51 so as to be driven by the same, the water turbine 51 being mounted on a water pipe connecting an upper reservoir (not shown) to a lower reservoir (not shown).

An intermediate shaft 52 is connected to a shaft 53 of the water turbine 51, and the rotor 50 is mounted on and connected to the intermediate shaft 53. The rotor 50 is rotated at a peripheral speed of at least 100 m/sec. Although this construction per se is similar to that used in a conventional salient-pole synchronous generator, this construction has been found to be optimal in view of problems inherent to the variable-speed generator 100, such as the greatly-increased weight of the rotor 50 as compared with such a synchronous generator, the problem of the cooling to meet the large-capacity and large-size construction, and assemblage and transport problems.

The construction of the rotor 50 mounted on the intermediate shaft 53 will now be described. A spider arm 1 formed as a welded structural member has a plurality of arm portions 12 extending radially from a rotatable shaft 11.

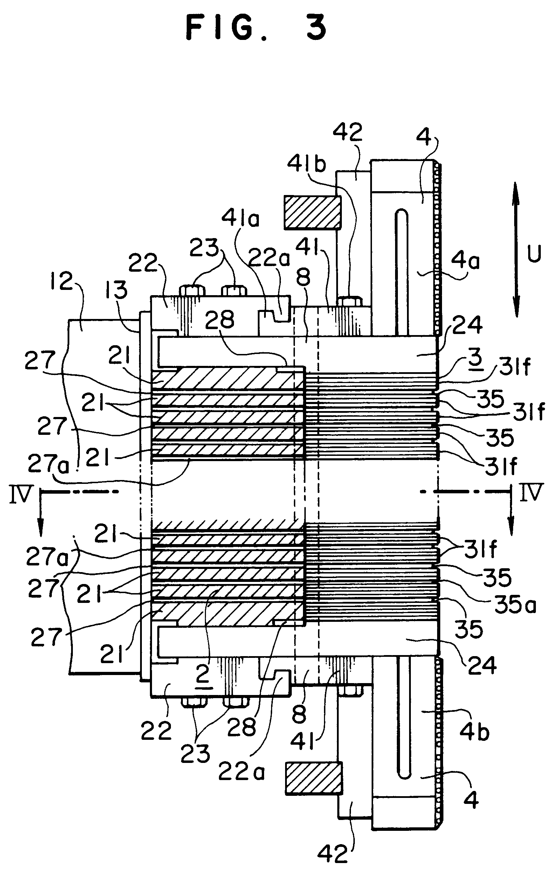

A rotor rim 2 is connected to the distal ends of the arm portions 12 of the spider arm 1. The rotor rim 2 is composed of thick annular disk-shaped steel plates 21 axially laminated together. Air ducts 27 (Fig. 3) are formed between any two adjacent ones of the steel plates 21 serving as rim members. The rotor rim 2 of the variable-speed generator 100 is so designed as to have a sufficient mechanical strength to withstand centrifugal forces produced by a laminated core 3 (with which the rotor rim 2 is engaged at its outer periphery) and a winding 4 during the rotation, as later described more in detail. The rotor rim 2 is also so designed as to avoid the risk that these centrifugal forces are concentrated locally on a part of the rotor rim 2. Further, the rotor rim 2 is so designed as not to be an obstacle for the flow of cooling air.

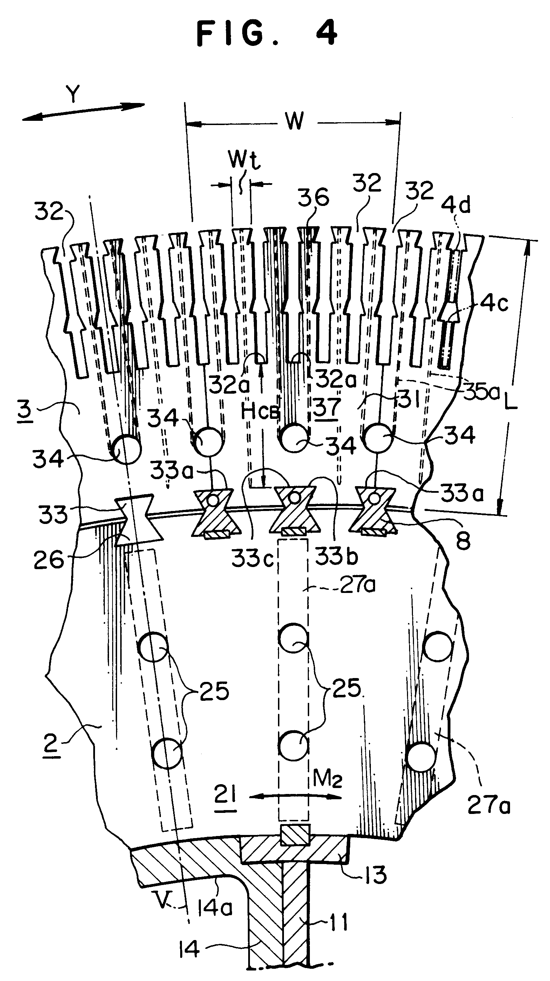

The laminated core 3 is fixedly connected to the outer periphery of the rotor rim 2 through connecting keys 8 (Figs. 3 and 4). The laminated core 3 is composed a stack or laminate of thin core plates 31 each being stamped into a fan-shape, the core plate 31 being made of silicon steel. Air duct 35 are formed between any two adjacent blocks 31f of core plates 31. As later more fully described, the laminate core 3 is so designated that the core itself has a sufficient mechanical strength, and that the laminated core 3 can be connected to the rotor rim 2 with a sufficient mechanical strength. The laminate core 3 is also arranged to have a ventilation function for sufficiently cooling the rotor 50.

In order to deal with eddy current produced due to the current flowing through the winding 4 inserted in slot grooves 32 (Fig. 4) formed in the outer peripheral portion of the laminated core 3, the laminated core 3 has such size and shape as to meet electrical and magnetic requirements to the maximum extent.

The winding 4, coated with a dielectric material, is inserted in the slot grooves 32 in a two-stage manner in the radial direction as denoted by 4c and 4d (Fig. 4), the slot grooves 32 being provided at the outer peripheral portion of the laminated core 3. Opposite ends 4a and 4b of the winding 4 are projected from the axial end faces of the laminated core 3 for connection purposes. The amount of current flowing through the winding 4 increases with an increase of the size of the generator, so that the generation of the Joule heat is increased. Therefore, it is necessary to be able to sufficiently cool the rotor 50. In the generator 100, this cooling is effected by the overall ventilation mechanism (the air ducts 27 and 35, etc.) of the rotor 50 at the area including the spider arm 1, the rotor rim 2 and the laminated core 3, as later more fully described.

A stator 5 comprises a stator winding 6, and is arranged around the outer periphery of the laminated core 3 with an annular gap provided therebetween.

A thrust bearing 7 is formed on the upper portion of the intermediate shaft 52.

Therefore, in the rotor 50 of the variable-speed generator 100, the spider arm 1 of a welded structure is mounted on the shaft 52 having the thrust bearing 7.

The thrust bearing 7 receives an axial thrust produced in the vertical shaft-type electric machine, and is rotatable and slidable relative to a support portion 7a. In the case of the variable-speed generator 100 of large capacity and size, it is desired to provide as large a space as possible above the rotary portion including the spider arm 1, the rotor rim 2 and the laminated core 3 of the rotor 50. One reason for this is that the slip ring device (not shown) is increased in size because the current flowing through the winding 4 of the rotor 50 is large in such a generator, and other reasons are directed toward an increased intake of the cooling air, an ease in handling of the winding ends (i.e., connection of the winding ends 4a and 4b), and the ease of maintenance, inspection and repair. Thus, it is most preferred that the thrust bearing 7 is mounted on the intermediate shaft 52.

Therefore, in the generator 100, the spider arm 1 is fixedly mounted on the top of the shaft 52 having the thrust bearing 7. Without providing the intermediate shaft 52, the thrust bearing 7 may be mounted directly on the water turbine shaft 53. Anyway, the thrust bearing 7 is disposed above the water turbine 51 and below the spider arm 1.

In the variable-speed generator 100, exciting or energizing current of a variable low frequency corresponding to the slip frequency is supplied to the rotor winding 4 (secondary winding) from a separate exciter or current supply 62 via terminals 63 and slip rings (not shown), and voltage of a constant frequency is taken from the stator winding 5 (primary winding) via a terminal 64 irrespective of the rotational speed of the water turbine 51.

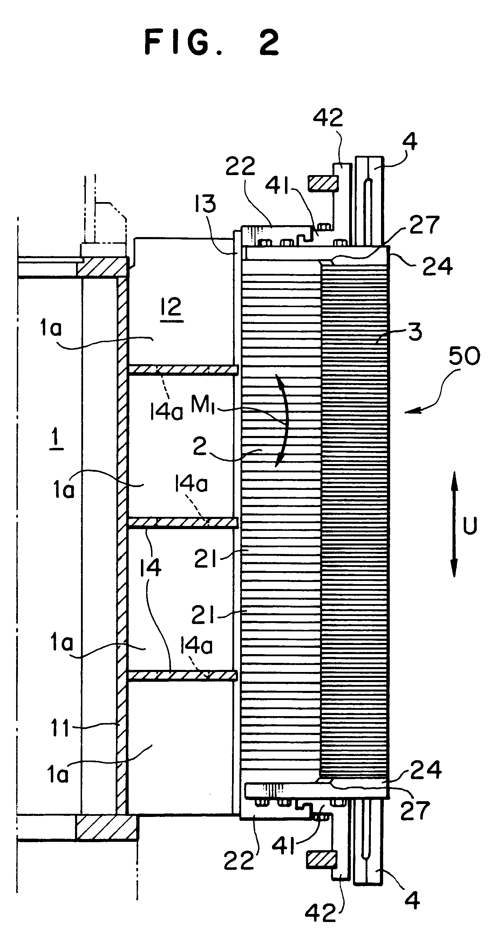

Fig. 2 shows a sectional view of the rotor 50 of the variable-speed generator 100 of Fig. 1.

Theoretically, the rotational speed of the rotor 50 of the variable-speed generator 100 can be increased infinitely. First of all, the electric rotating machine 100 having such characteristics is required to be so constructed as to have a sufficient mechanical strength. Secondly, the electric rotating machine is required to have sufficient electrical and magnetic efficiencies.

By solving various problems of the design and manufacture so as to meet these requirements, the rotor 50 of the variable-speed generator 100 is now suited for practical use. The main portions of the rotor 50 will now be described in more detail.

The spider arm 1 includes the shaft 11 connected to the shaft 52 with the thrust bearing 7 and serving as the axis of rotation, a plurality of arm portions 12 extending radially, and a retainer portion 13 provided at the distal end of the arm 12. The shaft 11, the arms 12 and the retainer portions 13 are fixedly connected to one another by welding. Reference numeral 14 denotes an annular reinforcement disk portion with a hole 14a for allowing the flow of cooling air are formed in this reinforcement disk portion 14. The spider arm 1 of this construction meets the requirements that it has sufficient mechanical strength and is reduced in weight as low as possible, and that it has as wide space area as possible. There are two purposes of using the spider arm 1 of such a construction in the variable-speed generator 100 of a large capacity.

One purpose is to ensure a large amount of flow of the cooling air for cooling the winding portion 4 of the rotor 5. When alternating current flows through the rotor winding 4, eddy current is produced in the laminated core 3, so that heat is generated. Also, with the increased size of the electric machine 100, this exciting current flowing through the winding 4 becomes large, and therefore the Joule heat is produced in the winding 4. In addition, the winding 4 received in the slots 32 is coated with the insulator. Therefore, in order to sufficiently cool the laminated core 3 and the winding 4, it is necessary to apply a large amount of the cooling air to the surfaces of the laminated core 3 and the winding 4 which constitute the heat-generating portion. In the spider arm 1 of the welded construction, all the areas except for the plurality of arm portions 12 engaged with the rotor rim 2 and the reinforcing plate 14 are spaces or cavities, and in cooperation with the air ducts 27 and 35 provided respectively in the rotor rim 2 and the laminated core 3, these spaces allow a large amount of the cooling air to flow in the radial direction.

The second purpose is to reduce the weight of the rotor 50 of the electric machine 100 to reduce the load on the thrust bearing 7 so as to improve the stability of the rotor 50, and to increase the mechanical strength of the structure of the rotor 50.

As compared with a salient-pole synchronous generator, having a rotor constituted by a rotor rim and magnetic poles, which is common as a conventional vertical shaft-type generator, the variable-speed generator 100 must be considerably increased in weight so as to achieve the same power output capacity because of the difference in the structure and shape of the laminated core 3 and the winding 4 similar to the stator winding.

However, since the rotor 50 has the spider arm 1 of a welded construction at its central portion thereof, the central portion can be reduced in weight, while maintaining the mechanical strength of this central portion at a high level. Therefore, the overall weight of the rotor 50 can be reduced, and also since the outer peripheral portion of the rotor 50 is heavier, the stability of the rotor 50 is improved.

Next, the rotor rim 2 fixed to the retainer portions 13 on the distal ends of the arm portions 12 of the spider arm 1 will now be described with reference to Figs. 2 to 4.

The rotor rim 2 is composed of doughnut-shaped integral rim members 21 laminated together in the axial direction, and the doughnut-shaped rim members 21 are fixed at their inner peripheries to the retainer portions 13 of the spider arm 1. The doughnut-shaped rim members 21 perform the function of withstanding against the axial moment ($M_1$ (Fig. 2) and circumferential moment $M_2$ (Fig. 4) of the rotor 50.

Clamp plates 22 are held respectively against the opposite ends of the rotor rim 2 in the laminated direction U (i.e., axial direction) via respective abutment plats 24. Through-holes 25 for the passage of bolts 23 therethrough are formed through each rim member 21. The laminated rim members 21 are integrally fixed to one another, together with the plates 22 and 24, by bolts 23 (fastening members) passing in the direction U through the holes 25 and holes formed through the plates 22 and 24.

In the embodiment shown in Fig. 4, two holes 25 for receiving the bolts 23 are disposed on each common radial line V. With the increased size of the electric machine 100, a larger tensile stress acts on each bolt 23 passing through the holes 25 to tie the rim members 21 together. To provide a sufficient strength to withstand such stress, one or more than two bolts 23 may be provided on the radial line V. The arrangement of the two holes 25 in the radial line V enables a greatly-improved cooling efficiency in connection with arrangement of the connecting keys 8 and bolt holes 34 in the core plates 31, as later described.

The doughnut-shaped or annular integral rim member 21 of the rotor rim 2 is integral and is formed from a thick steel plate. Unlike the core plates 31, the rim members 21 are not incorporated in the rotor 50 in the form of divided fan-shaped segments. Even if each rim member 21 is cut from a blank (thick steel plate) into a fan-shape from the viewpoint of the manufacture and transport, the rim member 21 is formed into an integral doughnut-shape or annular shape by welding or the like, when each rim member 21 is mounted in the rotor to provide the rotor rim 2.

Because of the doughnut-shaped construction, the rim members 21 support the centrifugal force exerted on the laminated core 3 and the winding 4, through force vectors divided in two directions of the circumference of the doughnut shape. For this support, rim engaging grooves 26 (more fully described later) of a dovetail shape are formed in the outer peripheral edge of each of the rim embers 21 and spaced at equal intervals from one another over the entire circumference thereof. Because of the provision of the doughnut-shaped rim members 21 and the equally-spaced rim engaging grooves 26, the centrifugal forces of the laminated core 3 and the winding 4 do not virtually or substantially act on the spider arm 1.

Although the thickness of the rim member 21 varies with the high speed and increased size of the electric machine 100, this thickness is in the range of between 30 mm and 90 mm for reasons mentioned below. Namely, if the rim member 21 is too thin, it is impossible to provide the air ducts 27 in the rotor rim 2. In contrast, if the rim member 21 is too thick, the density of distribution of the air ducts 27 in the axial direction is insufficient. The air ducts 27 are formed between any two rim members 21 adjacent to each other in the laminated direction U.

Each of many air ducts 27 is formed by mounting duct spacers 27a of rectangular cross-section between any two adjacent rim members 21 when the rim members 21 made of a thick carbon steel plate are laminated or stacked together in the axial direction U of the rotor 50. In view of the mechanical strength required for the rotor rim 2 of the rotor 50, the dimension of the air duct 27 in the direction U (that is, the interval between the two adjacent rim members 21 in the direction U) is about 20 mm at the maximum. The air ducts 27 formed in the rotor rim 2 serve as a desired number of cooling air passages extending from the inner peripheral edge of the rotor rim 2 to the outer peripheral edge thereof.

Although the clamp plates 22 and the abutment plates 24 are doughnut-shaped like the rim member 21, they may not be of an integral construction. In the case of the electric machine 100 of particularly large size and capacity, it is preferred that each of the clamp plate 22 and the abutment plate 24 be divided into fan-shaped segments. One reason for this is that the clamp plates 22 and the abutment plates 24 do not directly receive the centrifugal forces of the laminated core 3 and the winding 4, and therefore they do not need to be of an integral construction. Another reason is that the manufacture and assemblage can be facilitated if each of the plates 22 and 24 is divided into fan-shaped segments.

the radial width of the rim member 21 of the rotor rim 2 is so determined that the rim members 21 have a sufficient strength not to be bent by the above centrifugal forces, and that the rim members 21 have a weight required for the inertia in view of the whole of the rotor 50, and that the rim member 21 has such an outer diameter as to be fitted in the inner periphery of the laminated core 3, and that the rim members 21 ensure ventilation properties suited for the cooling.

It has been found that in the variable-speed generator 100, the rotor rim 2 can be easily formed so as to support much greater centrifugal force for reasons mentioned below, as compared with the conventionally proposed machine of Fig. 7.

Firstly, since the rim member 21 is composed of a doughnut-shaped one-piece member, calculations can be made to determined whether or not the rim member 21 or the rotor rim 2 has a sufficient strength to withstand the centrifugal force, without considering the arrangement and number of the air ducts 27. Therefore, the feasibility from the viewpoints of the structure and production could be sufficiently confirmed through its relationship with the spider arm 1 and the laminated core 3.

The second point relates to the arrangement of the clamp bolts 23. If the purpose is only to ensure the large amount of flow of the cooling air, it may be preferred not to provide the bolts 23 extending through the rim members 21 in the axial direction. However, this is impossible if a sufficient mechanical strength is desired to be imparted to the rotor rim 2.

In the variable-speed generator 100, the holes of the rim member 21 (hence the bolts 23 passed through the holes 25) are disposed on the common radial line V interconnecting the bolt hole 34 of the laminated core 3 (more fully described later) and the connecting key 8 extending in the axial direction U to connect the rotor rim 2 and the laminated core 3 together. With this arrangement, an obstacle for the cooling air flowing through the air ducts 27 can be restrained to a minimum, and besides the shape of the duct spacer 27a disposed in the air duct 27 can be simplified. Namely, if the clamp bolts 23 or the connecting key 8 constitute obstacles for the cooling air flowing radially outwardly from the inner peripheral edge of the rotor rim 2 toward the laminated core 3, there is a possibility that a sufficient amount of the cooling air to cool the surfaces of the laminated core 3 and the winding 4 can not be obtained. Despite this, since in the rotor 50, these obstacles are all disposed in the common radial line V, the barrier against the flow of the cooling air can be restrained to a minimum.

Further, since the duct spacers 27a disposed at those areas where the above obstacles are not disposed can be of the same shape and size, the manufacture thereof can be made more easily.

The fan-shaped core plate 31 is stamped from a thin silicon steel plate having a thickness of 0.3 mm to 0.9 mm, and these fan-shaped core plates 31 are arranged in an annular form and are laminated or stacked to thereby form the laminated or stacked core 3. The core plate 31 has a number of slot grooves 32 at its outer peripheral portion, and the winding 4 is inserted in each slot groove 32 in a two-stage 4c, 4d in the radial direction V. Core engaging grooves 33 formed in the inner peripheral edge of the core plate 31 are situated respectively in registry with the corresponding rim engaging grooves 26 formed in the outer peripheral edge of the rim member 21.

When assembling the rotor 50, the fan-shaped core plates 31 are laminated or stacked one by one around the outer periphery of the rotor rim 2. During this laminating, the core plates 31 forming a certain annular layer are displaced in the circumferential direction Y by the pitch of the core engaging grooves 33 relative to the core plates 31 forming an annular layer disposed immediately below the first-mentioned annular layer. Each time a predetermined number of such annular layers are laminated to form a laminate or stack unit substantially equal to the thickness of the rim member 21, duct pieces 35a made of steel having a rectangular cross-section are mounted in such a manner as to be suitably positioned with respect to the air ducts 27 of the rotor rim 2 in the axial direction U and the radial direction V, thereby forming the air ducts 35 in the laminated core 3. In the rotor 50 comprising the spider arm 1, the rotor rim 2 with the air ducts 27 and the laminated core 3 with the air ducts 35, cooling air flows from spaces 1a of the spider arm 1 disposed at the inner peripheral portion to the winding 4 disposed at the outer peripheral portion of the laminated core 3, via the apertures 14a, the air ducts 2 of the rotor rim 2 and the air ducts 35 of the laminated core 3. With this construction, a necessary amount of the cooling air is supplied through such cooling air passages in accordance with the rotation of the rotor 50.

Each core plate 31 has a pair of half grooves 33a formed respectively in the circumferentially-opposite side edges thereof, and a full or complete groove 33b provided at a circumferentially central portion thereof. Here, the full groove 33b means one complete core engaging groove 33, and the half groove 33a cooperates with the half groove 33a of the adjoining core plate 31 to constitute one complete core engaging groove 33. Each core plate 31 has two core engaging grooves, and here the two half grooves 33a are counted as one core engaging groove. The two half grooves 33a may be omitted in which case two full engaging grooves 33b are provided respectively at the right and left side portions of the core plate 31 in a balanced manner, although the embodiment illustrated is preferred. The reason that the number of the core engaging grooves in the core plate 31 is limited to two is as follows. If the number of the engaging grooves 33 per the core plate 31 is one, the fan-shaped core plate 31 can not be stacked, at positions circumferentially shifted. On the other hand, if the number of engaging grooves 33 is three or more, there is fear that one of the grooves may not serve for support.

During the rotation of the rotor 50, there is produced a force tending to deform the core plate 31 by the centrifugal force acting on the core plates 31 themselves, and also there is produced a force exerted on the core plate 31 by the centrifugal force acting on the winding 4 received in the slot grooves 31. Upon appraising influences of these two forces on the large-size construction of the electric rotating machine 100 resulting from the large capacity requirement, it has been found that it is appropriate that the core plate 31 should have such a shape as to satisfy the following formula:

$$0.5 \times L \leqq W \leqq 2.0 \times L \quad (1)$$

where "W" represents the width of the outer peripheral edge of the core plate 31 in the circumferential or peripheral direction Y, and "L" represents the width of the core plate 31 in the radial direction.

The reason that the condition $(W \leqq 2.0 \times L)$ is required is as follows. The core plates 31 have such a shape (i.e., fan-shape) that these core plates, when assembled or combined together, form the annular plate. However, in the case of the generator-motor 100 of a large capacity, since the diameter of the rotor 50 is considerably large, the outer peripheral or circumferential length is considerably long, and therefore the number of core plates 31 required to form one annular layer is considerably large. Therefore, the shape of each core plate 31 may be thought to be generally rectangular.

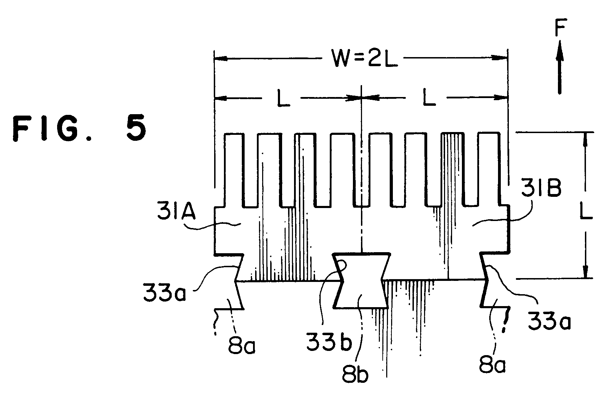

Fig. 5 is a view showing one of the core plates 31 of the rotor 50 shown in Fig. 4 and the associated connecting keys 8. Here, for illustration purposes, the virtual halves of the core plate 31 each supported by the two adjacent connecting keys 8a and 8b are designated by reference numerals 31A and 31B, respectively. Fig. 5 shows an example in which the value of W is its upper limit (that is, $W = 2 \times L$).

In this example, each of the core plate halves 31A and 31B has a square shape, and the core plate halves 31A and 31B are equally supported by the left and right keys 8a through the key 8b. Therefore, the core plate halves 31A and 31B are supported against the centrifugal force F in a balanced manner in the right-and-left direction, thereby providing an increased mechanical strength. On the other hand, in case of $W > 2 \times L$, the shape of each of the core plate halves 31A and 31B is rectangular rather than square (due to dimensional errors in the left and right core plate halves 31A and 31B or positional errors in the support keys 8a for the halves 31A and 31B), and the above balance is liable to be destroyed, thereby reducing the mechanical strength.

The unbalance in supporting the core plate 31 by means of the keys 8 is caused not only by the error in sizes of the core plates 31 during the production thereof but also by deformation thereof due to various reasons during the operation of the machine 100 such as windage loss, iron loss and Joule's heat at the windings.

Such unbalance becomes serious problems in the unfavorable case where the condition $0.5L \leqq W \leqq 2L$ is not satisfied because the elongation or expansion in the longitudinal or transverse direction ($\Delta L$ or $\Delta W$ respectively) will not be negligible in the unfavorable case.

In a case where $W/L \sim 2$, the elongation or expansion in the transverse direction becomes relatively significant. A certain degree of "one-side-abutment" occurs unavoidably between the key 8 and the core plate 33 where one side edge of the core engaging groove 33 is abutted against the key 8 while the other side edge of the core engaging groove 33 is not substantially abutted thereagainst. When the degree of one-side-abutment is relatively low, both side edges may come to engage according to the deformation due to increase in the rotation speed and the centrifugal force exerted. However, as the elongation or expansion in the transverse direction becomes more significant, the degree of the one-side-abutment also becomes higher, which is likely to be caused in the case where $W/L \sim 2$ because the core plate 31 has less heat capacity than the rim member 21 and which will be unfavorably kept even upon relatively high speed rotation/large centrifugal force.

The reason that the condition of ($0.5 \times L \leqq W$) is required is as follows:

Fig. 6 is a view showing one of the core plates 31 of the rotor 50 shown in Fig. 4 and the associated connecting keys 8. Here, the core plate 31 is virtually equally divided into two halves in the radial direction, and the two halves are designated by reference numerals 31C and 31D, respectively.

Fig. 6 shows an example in which the value of W is its lower limit (that is, $W = 0.5 \times L$).

In this example, each of the core plate halves 31C and 31D has a square shape, and up up to this condition, the outer core plate half 31C and the inner core plate half 31D are kept in balance relation to each other with respect to the rotational direction Y, thereby providing an increased mechanical strength. On the other hand, in case of $W < 0.5 \times L$, each of the halves 31C and 31D is rectangular rather than square, and the above balance is liable to be destroyed, thereby reducing the mechanical strength.

In a case where $W/L \sim 0.5$, the elongation or expansion in the longitudinal (radial) direction becomes relatively significant. Such longitudinal elongation of the core plate 31 tends to separate the centers of gravity 31CG, 31DG of the two half rectangles 31C, 31D.

If the distance between the centers of gravity 31CG, 31DG becomes larger, the difference in the torque exerted on the two half rectangles 31C, 31D tends to be larger upon increasing or decreasing the rotation speed, which can be the cause of the unstable support.

Further, if the distance between the centers of gravity 31CG, 31DG becomes larger, the torque exerted on such longitudinally elongated core plate 31 upon increasing or decreasing the rotation speed tends to be larger, which can be the cause of the unbalance in the torques exerted on the core plates 31 which will have slightly different shapes with each other.

In the core plate 31 satisfying this condition (1) of the width (length) W, we now assume that the number of the core engaging grooves 33 formed in the core plate 31 is increased. In this case, when the core engaging grooves 33 are connected to the corresponding rim engaging grooves 26 of the rotor rim 2 by the respective connecting keys 8, there is a possibility that due to inevitable dimensional errors, stresses acting on some of the core engaging grooves 33 greatly differ from stresses acting on other engaging grooves 33, and also there is a possibility that the stress acting on each core engaging groove 33 considerably differs, depending on the position thereof. This has been confirmed through experiments. Further, in order to flow the cooling air as much as possible by reducing the flow resistance offered by the connecting keys 8 extending perpendicularly through the air ducts 27 and 35, it is preferred that the number of the engaging grooves 33 be reduced as much as possible.

Preferably, the laminated core 3 has a predetermined relation between the number $N_{SP}$ of the slot grooves 32 per one magnetic pole (which slot grooves 32 are formed in the outer peripheral portion of the laminated core 3 at equal intervals), an cross-sectional area (i.e., an area of the peripheral surface) Wt of a tooth 36 formed between any two adjacent slot grooves 32, and a vertical sectional area $H_{CB}$ of a core back portion 37 along the diametrical line which core back portion 37 extends radially from the bottom 32a of the slot grooves 32 to the bottom 33c of the core engaging grooved 33 formed in the inner periphery of the laminate core 3. In Fig. 4, for illustration purposes, the thickness (length in the axial direction U) is a unit length (= 1).

If influences of the eddy current and the optimization of the energy conversion efficiency are not taken into consideration, the shorter the radial dimension L of the core plate 31 is, the less the weight of the core 3 becomes, so that the centrifugal force of the core 3 is reduced. In this case, the required mechanical strength of the rotor rim 2 mechanically connected to the laminated core 3 can be smaller. However, if only such mechanical conditions are pursued, electrical efficiencies are lowered.

The greatest disadvantage thereof is the risk that eddy current, produced when supplying alternating current to the winding 4 of the electric machine 100, is increased.

In order to keep the eddy current to a low level, it is desirable that varying magnetic flux paths are all constituted by a laminate of thin silicon steel plates, as is usually the case with a conventional small-size induction motor.

However, in the case of the variable-speed generator 100 of large size and capacity, it is impossible to make the whole part of the rotor 50 by means of the laminated core 3.

Therefore, in view of the mechanical strength, the electrical efficiency and the production efficiency, the shape and structure of the laminated core 3 are determined.

Most of the magnetic fluxes produced by the current flowing through the winding 4 pass through the core plates 31 made of silicon steel having a high magnetic permeability. Since the core 3 is composed of a number of thin core plates 31 laminated together, the generation of the eddy current can be restrained to a minimum. Further, if the situation that part of the magnetic flux passing through the core plates 31 passes into the rim member 21 can be avoided, then heat will not be generated in the rim plates 21. However, if the radial length L of the core plate 31 is increased irrespective of the depth of the slot groove 32, there is a risk that the mechanical strength of the rotor 50 is too lowered, and the assembling of the laminated core 3 using several tens of thousands of core plates 31 can not be performed easily.

To solve this problem, in the variable-speed electric machine 100, the laminated core 3 is so constructed as to satisfy the following formula:

$$0.8 \, (Wt \times N_{SP}) \leq H_{CB} \leq 2.0 \, (Wt \times N_{SP}) \quad (2)$$

where "Wt" represents the cross-sectional area of the tooth 36 of the laminated core 3, "$N_{SP}$" represents the number of teeth 36 included in one magnetic pole formed by the connection of the winding 4 inserted in the slot grooves 32, "$H_{CB}$" represents the sectional area (i.e., the area of the core back portion 37 through a plane perpendicular to the direction of the magnetic flux) of the core back portion 37 extending from the bottom 32a of the slot groove 32 to the bottom 33c of the core engaging groove 33.

The reason that the above condition is required is as follows. At first, it is assumed that the core plates 31 are made from anisotropic silicon steel where the saturated magnetic flux density along cold-rolled direction (100) thereof is 1.0/0.8 times greater than that along a direction perpendicular to the cold-rolled direction (100). Former direction is aligned with the extending direction of the teeth portion 36. It is further assumed that the heat at the core back portion 37 is generally at the same level as the heat at the teeth portion 36, and in the case of $H_{CB} \leq 0.8 \, (Wt \times N_{SP})$, the magnetic flux path at the core back portion 37 is narrower than the magnetic flux path at the teeth portion 36 of the laminated core 3, and the magnetic flux density at the core back portion 37 becomes higher. As a result, the core back portion 37 is magnetically saturated, and therefore a magnetic flux leakage from the core back portion 37 to the rotor rim 2 is encountered, and also the core back portion 37 is overheated due to an eddy current loss and so on.

In the case of $H_{CB} \geq 2.0 \, (Wt \times N_{SP})$, the core back portion 37 is not fully used as the magnetic flux path, and therefore the material of the laminated core 3 is somewhat useless and uneconomical. In conclusion, when $H_{CB}$ is in the range defined by the above formula, there is no risk of the overheating of the core back portion 37.

As to the cross-sectional area of the core duct portion 35, the maximum ratio of the duct cross-sectional area at the core back portion 37 with respect to that at the teeth portion 36 is about 4:1. In this case, the ratio of the heat transfer coefficient or factor at the core back portion 37 with respect to that at the teeth portion 36 is substantially 1:4, and the heat dissipation capability of the teeth portion 36 is four times larger than the heat dissipation capability of the core back portion 37.

Since the magnitude of the eddy current loss is proportional to the square of the magnetic flux density, the magnetic flux density at the teeth portion 36 may be twice as large as that at the core back portion 37, because of the above four times-larger heat dissipation ability. Therefore, in this case, the cross-sectional area $Wt \times N_{SP}$ of the magnetic flux path at the teeth portion 36 can be reduced to 0.5 times the cross-sectional area $H_{CB}$ of the magnetic flux path at the core back portion 37. In other words, the cross-sectional area $H_{CB}$ of the magnetic flux path of the core back portion 37 can be increased to 2.0 times the cross-sectional area $Wt \times N_{SP}$ of the magnetic flux path at the teeth portion 36. Therefore, the following formula is established:

$$H_{CB} \leq 2.0 \times (Wt \times N_{SP})$$

On the other hand, in the case of $H_{CB} > 2.0 \times (Wt \times N_{SP})$, even if the core back portion 37 is increased, the cooling efficiency is not improved, and besides the mechanical strength of the rotor 50 is reduced, and the assembling operation of the laminated core 3 is adversely affected.

When the laminated core 3 satisfies the above relation, it has also been confirmed through calculations that most of the magnetic fluxes induced by the current flowing through the winding 4 pass through the laminated core 3 formed by laminating the core plates 31 of a thin silicon steel plate.

In the laminated core 3 satisfying the above condition, the penetration of the magnetic flux into the rim members 21 can be virtually negligible, and therefore the eddy current loss in the rim members 21 can be also negligible. Therefore, the thickness of the rim member 21 can be freely or independently determined in accordance with the required mechanical strength and the required structure of the cooling air ducts 27.

It can be easily thought that the ratio of the cross-sectional area $H_{CB}$ of the magnetic flux path at the core back portion 37 with respect to the cross-sectional area Wt x $W_{SP}$ of the magnetic flux at the teeth portion 36 per one magnetic pole more or less varies with the degree of the high-speed and large-capacity construction or structure of the variable-speed generator 100. For example, in the case where the number of magnetic poles provided at the outer peripheral portion of the rotor 50 is large, it is considered that the above cross-sectional area ratio is reduced. In such a case, it would be easy for one skilled in the art to reduce the cross-sectional area ratio $H_{CB}/(Wt \times N_{SP})$, allowing some eddy current loss.

Even in such a case, in the variable-speed generator motor 100 of a high-speed and large-capacity construction, the above cross sectional area ratio $H_{CB}/(Wt \cdot N_{SP})$ will satisfy the following condition:

$$0.5 \, (Wt \times N_{SP}) \leqq H_{CB} \leqq 2.0 \, (Wt \times N_{SP}) \quad (2)$$

More specifically, in the case where the generator/motor 100 has a larger capacity and higher speed according to progressing development thereof, the velocity of the cooling air flowing through the core ducts 35 is increased. Since this velocity can be increased to 1.5 times according to the increase in the rotation speed from 400 rpm to 600 rpm, the heat transfer coefficient or factor can also be increased to 1.5 times. Therefore, the cross-sectional area $H_{CB}$ of the magnetic flux path at the core back portion 37 can further be reduced to 0.67 times, i.e., 1/1.5.

Therefore, the formula $0.8 \, (Wt \times N_{SP}) \leqq H_{CB}$, can be rewritten into the following formula when the electric machine has an increased capacity:

$$0.67 \times 0.8 \, (Wt \times N_{SP}) \; = \; 0.54 \, (Wt \times N_{SP})$$
$$\simeq 0.5 \, (Wt \times N_{SP}) \leqq H_{CB}$$

Therefore, the following is obtained:

$$0.5 \, (Wt \times N_{SP}) \leqq H_{CB}.$$

Each pair of rim engaging groove 26 and core engaging groove 33 are connected together by the corresponding connecting key 8 fitted in these grooves 26, 33 and extending in the axial direction U of the rotor 50.

Each connecting key 8 extends through the upper and lower abutment plates 24, and is clamped at its opposite ends by bolts (not shown), together with coil clamps 41 having respective winding supports 42 which respectively support the ends 4a and 4b of the winding 4 projecting from the laminated core 3, the coil clamps 41 being fixed respectively at the opposite ends of the connecting keys 8.

The connecting key 8 is disposed on the radial line V on which the corresponding holes 25 (through which the bolts 23 for clamping the rotor rim 2 extend) and the corresponding hole 34 (through which the bolt for clamping the laminated core 3 extends) are disposed. The connecting keys 8 transmit the centrifugal forces, produced in the laminated core 3 and the winding 4, to the rotor rim 2. Also, the connecting keys 8 performs such a positioning function that the slot grooves 32 are aligned in the axial direction of the laminated core 3.

Each of the upper and lower coil clamps 41 has a doughnut-shaped configuration as a whole defined by a plurality of separate members, and the winding supports 42 are provided on the coil clamp 41 at appropriate intervals circumferentially of the coil clamp 41. The coil clamp 41 has at its inner periphery an engaging portion 41a which overlaps and engages an engaging portion 22a formed at the outer periphery of the clamp plate 22. The coil clamps 41 are clamped by the bolts 41b passed through the holes 34 in the laminated core 3. The coil clamps 41 are thus arranged so as to prevent the deformation of the winding ends 4a and 4b due to the centrifugal force, and even after a binding member is wound around the winding supports 42 to hold the ends 4a and 4b of the winding 4, a sufficient core clamping force can be maintained.

The abutment plates 24, when clamped by the bolts 41b, apply axial compressive forces to the laminated core 3, in which case the upper surface of the outer peripheral portion of the uppermost rim member 21 and the lower surface of the outer peripheral portion of the lowermost rim member 21 serve as fulcrum or support points. A relief portion 28 for causing such compressive force to act effectively is formed in each of the uppermost and lowermost rim member 21.

In order to cause such compressive force to act more effectively, the surface of the abutment plate 24 to be abutted against the end face of the laminated core 3 directed in the axial direction U may be machined in such a manner that the abutment plate 24 increases in thickness progressively toward its outer periphery. By doing so, the abutment plate 24 can apply, to the laminated core 3, the axial compressive force which becomes greater toward the outer periphery of the laminated core 3, and therefore a sufficient clamping force can be ensured even if a mechanical degradation proceeds over a prolonged period of use of the electric machine.

The vertical shaft-type variable-speed generator/motor provided with the rotor of the above construction or structure can achieve high speed and large capacity equal to those of the conventional salient-pole synchronous generator.

The practical use of this kind of variable-speed generator/motor provides an advantage that the stability of the power system can be improved.

Further, because of its size, the variable-speed generator/motor of the present invention can produce a "fly wheel effect" of a level required by the water turbine, and therefore even when this generator is installed in a pumping-up hydro-electric power station, it can achieve an excellent pumping-up efficiency.

## Claims

1. An electric rotary machine comprising:

a rotor (50) including a substantially vertical shaft (11) provided at a center of said rotor, a laminated core (3) fixed to said shaft (11) and disposed at an outer peripheral portion of said rotor, and a winding (4) covered with dielectric material and inserted in slot grooves (32) formed in an outer peripheral portion of said laminated core; and

a stator (5) including a stator core disposed around the outer periphery of said rotor to be opposed to said rotor through a gap therebetween, and a stator winding (6) mounted on said stator core;

said rotor (50) comprising a spider arm (1) composed of the shaft (11) and arm portions (14) which are fixedly mounted on said shaft and extend radially outwardly from said shaft, and an annular rotor rim (2) fixedly mounted on distal ends of said arm portions of said spider arm;

said laminated core (3) being fixedly mounted on an outer periphery of said rotor rim (2), said laminated core having laminated layers, each of said layers being composed of a plurality of fan-shaped thin core plates (31) of steel arranged in an annular shape, and each core plate having said slot grooves (32) formed in an outer periphery thereof;

said rotor rim (2) having laminated rim members (21) each made of an annular thick steel plate (21), each rim member (21) having engaging grooves (26) being formed in an outer periphery thereof at equal intervals, said core plate (31) having core engaging grooves (33) opposed to said rim engaging grooves (26), respectively, in such a manner that the number of completed core engaging grooves (33) is two, and a connecting key (8) being fitted in each mating pair of said core engaging groove (33) and said rim engaging groove (26) to fix said laminated core (3) to said rotor rim (2), said connecting key (8) extending in an axial direction of said rotor; and

the following relation being established:

$$0.5 \times L \leqq W \leqq 2.0 \times L$$

where "W" represents a width (length) of said fan-shaped core plate along the outer periphery thereof, and "L" represents a width of said fan-shaped core plate extending between its inner and outer peripheries.

2. An electric rotary machine according to claim 1, in which said core engaging grooves (33) of said core plate are defined by two half grooves (33a) provided respectively at opposite peripheral sides of said fan-shaped core plate (31) and one full groove (33b) provided at a central portion of said core plate (Fig. 5).

3. An electric rotary machine according to claim 2, in which the following relation is established:

$$0.5 \, (Wt \times N_{SP}) \leqq H_{CB} \leqq 2.0 \, (Wt \times N_{SP})$$

where "Wt" represents an area of a peripheral surface of a tooth (36) of said laminated core (3) lying between two adjacent slot grooves (32), "$N_{SP}$" represents a number of said teeth included in one magnetic pole defined by the connection of said windings inserted in said slot grooves, and "$H_{CB}$" represents a vertical cross-sectional area of a core back portion of said laminated core, extending from bottoms (32a) of said slot grooves (32) to bottoms of said core engaging grooves (33), along a diametrical line of said core back portion (Fig. 4).

4. An electric rotary machine according to claim 1, in which each of said annular rim members of said rotor rim has a thickness of 30 to 90 mm.

5. An electric rotary machine according to claim 4, in which said rim members (21) are laminated axially of said rotor in such a manner that first air ducts (27) are formed between two adjacent rim members for passing air radially therethrough, said core plates (31) being laminated in such a manner that second air ducts (35) are formed substantially in registry with said first air ducts (27).

6. An electric rotary machine according to claim 5, in which said rotor rim (2) and said laminated core (3) have respective holes (25 and 34) through which bolts (23 and 41b) are passed to clamp said rotor rim and said laminated core in the direction of the laminate thereof, and mating ones of said holes and each mating pair of said rim engaging groove and said core engaging groove receiving said connecting key (8) being disposed on a common radial line (V) of said rotor (Fig.4).

7. An electric rotary machine according to claim 6, further comprising abutment plates (24) respectively holding end surfaces of said rotor rim directed in its laminated direction, as well as end surfaces of said laminate core directed in its laminated direction, each of endmost ones of said rim members (21) abutted respectively against said abutment plates (24) having a relief portion at its outer peripheral portion, so that when said rotor rim (2) is clamped by bolts (23) through clamp plates (22), compressive forces can be applied to said laminated core (3) in its laminated direction, with a radially outer periphery of the contact area between said rotor rim (2) and each of said abutment plates (24) serving as a fulcrum point.

8. An electric rotary machine according to claim 7, in which an outer peripheral portion (22a) of said clamp plate (22) overlaps and engages an inner peripheral portion of a coil clamp (41), and is clamped by said bolts.

9. An electric rotary machine according to any one of claims 1 to 8, in which said arm portions (14) of said spider arm (1) are fixed to said shaft (11) by welding, said machine being of a variable-speed type.

10. A hydro-electric power installation provided with said electric rotary machine of claim 9, comprising:

   a water turbine (51) having a shaft (53) connected coaxially to said shaft (11) of said rotor (50); and

   a thrust bearing (7) through which said rotor is supported;

   said rotor having a fly wheel effect required by said water turbine, said rotor being rotatable at a peripheral speed of at least 100 m/sec.

11. Hydro-electric power installation according to claim 10, in which said thrust bearing is provided on an intermediate shaft (52) which is disposed between and interconnects said shaft of said water turbine and said shaft of said rotor.

12. A method for producing an electric rotary machine including a rotor (50) having a substantially vertical shaft (11) provided at a center of said rotor (50), a laminated core (3) fixed to said shaft (11) and disposed at an outer peripheral portion of said rotor (50), and a winding (4) covered with dielectric material and inserted in slot grooves (32) formed in an outer peripheral portion of said laminated core (3), and a stator (5) having a stator core disposed around the outer periphery of said rotor to be opposed to said rotor with a gap therebetween, and a stator winding (6) mounted on said stator core; said method comprising the steps of:

   welding arm portions (14) to said shaft (11) in such a manner that said arm portions (14) extend radially outwardly from said shaft, thereby forming a spider arm (1);

   laminating rim members (21) of an annular thick steel plate in an axial direction of said shaft (11) and fixing said rim members (21) to distal ends of said arm portions (14) of said spider arm (1) in such a manner that air ducts (27) for passing air radially therethrough are formed, thereby forming a rotor rim (2), said rim member (21) having rim engaging grooves (26) formed at its outer periphery at equal intervals; and

   laminating fan-shaped core plates (31) in an annular shape around an outer periphery of said rotor rim (2) to thereby form a laminated core, each of said fan-shaped core plates (31) being stamped from a thin steel plate, each of said core plate (31) having at its outer periphery slot grooves (32) and having at its inner periphery core engaging grooves (33) opposed to said rim engaging grooves (26), respectively, said core plate (31) having such dimensions as to satisfy the following relation:

$$0.5 \times L \leqq W \leqq 2.0 \times L$$

   where "W" represents a width (length) along the outer periphery of said fan-shaped core plate (31), and "L" represents a width of said fan-shaped core plate (31) extending between its inner and outer peripheries;

   said laminated core (3) being so constructed as to satisfy the following relation:

$$0.5 \, (W_t \times N_{SP}) \leqq H_{CB} \leqq 2.0 \, (W_t \times N_{SP})$$

   where "$W_t$" represents an area of a peripheral surface of a tooth (36) of said laminated core (3) lying between two adjacent slot grooves (32), "$N_{SP}$" represents a number of said teeth included in one magnetic pole defined by connection of said windings inserted in said slot grooves, and "$H_{CB}$" represents a vertical cross-sectional area of a core back portion of said laminated core, extending from bottoms (32a) of said slot grooves (32) to bottoms of said core engaging grooves (33), along a diametrical line of said core back portion.

**Patentansprüche**

1. Elektrische Rotationsmaschine mit
   einem Rotor (50) mit einer in der Mitte des Rotors vorgesehenen, im wesentlichen vertikalen Welle (11), einem geschichteten Kern (3), der an der Welle (11) befestigt und an einem äußeren Umfangsabschnitt des Rotors angeordnet ist, und einer Wicklung (4), die von einem dielektrischen Material umhüllt ist und in schlitzförmige Nuten (32) eingeführt ist, die in einem äußeren Umfangsabschnitt des geschichteten Kerns ausgebildet sind; und
   einem Stator (5) mit einem Statorkern, der um den äußeren Rand des Rotors angeordnet ist, um dem Rotor mit einem dazwischen liegenden Spalt gegenüber zu liegen, und einer auf dem Statorkern angeordneten Statorwicklung (6);
   wobei der Rotor (50) ein Armkreuz (1) umfaßt, das aus der Welle (11) und Armabschnitten (14) besteht, die auf der Welle befestigt sind und sich von der Welle radial nach außen erstrecken, und eine ringförmige Rotoreinfassung (2), die an den entfernt liegenden Enden der Armabschnitte des Armkreuzes befestigt ist;

wobei der geschichtete Kern (3) auf einem äußeren Rand der Rotoreinfassung (2) befestigt ist und der geschichtete Kern aufeinandergeschichtete Schichten aufweist, wobei jede dieser Schichten aus mehreren ringförmig angeordneten dünnen fächerförmigen Kernplatten (31) aus Stahl zusammengesetzt ist und jede Kernplatte an ihrem äußeren Rand die schlitzförmigen Nuten (32) aufweist;

wobei die Rotoreinfassung (2) aufeinandergeschichtete Einfassungselemente (21) aufweist, die jeweils aus einer dicken, ringförmigen Stahlplatte (21) bestehen, wobei jedes Einfassungselement (21) in regelmäßigen Abständen an seinem äußeren Rand ausgebildete Eingriffsnuten (26) aufweist und die Kernplatte (31) jeweils derart den Eingriffsnuten (26) der Einfassung gegenüberliegende Kerneingriffsnuten (33) aufweist, daß die Anzahl der vollständigen Kerneingriffsnuten (33) bei zwei liegt, und einen Verbindungsstift (8), der in jedes zusammengehörige Paar von Kerneingriffsnute (33) und Einfassungseingriffsnute (26) eingepaßt ist, um den geschichteten Kern (3) an der Rotoreinfassung (2) zu befestigen, wobei sich der Verbindungsstift (8) in der axialen Richtung des Rotors erstreckt; und

wobei das folgende Verhältnis hergestellt wird:

$$0,5 \cdot L \leqq W \leqq 2,0 \cdot L$$

wobei "W" die Breite (Länge) der fächerförmigen Kernplatte entlang ihres äußeren Rands bezeichnet und "L" die Breite der fächerförmigen Kernplatte zwischen ihrem inneren und ihrem äußeren Rand bezeichnet.

2. Elektrische Rotationsmaschine nach Anspruch 1, bei der die Kerneingriffsnuten (33) der Kernplatte durch zwei Halbnuten (33a) festgelegt werden, die jeweils an den gegenüberliegenden Randseiten der fächerförmigen Kernplatte (31) vorgesehen sind, und durch eine ganze Nute (33b), die in einem mittleren Abschnitt der Kernplatte vorgesehen ist (Fig.5).

3. Elektrische Rotationsmaschine nach Anspruch 2, bei der das folgende Verhältnis hergestellt wird:

$$0,5(Wt \cdot N_{SP}) \leqq H_{CB} \leqq 2,0(Wt \cdot N_{SP})$$

wobei "Wt" einen Bereich einer Umfangsfläche oder einen zwischen zwei aneinander grenzenden schlitzförmigen Nuten (32) gelegenen Steg (36) des geschichteten Kerns (3) bezeichnet, "$N_{SP}$" die Anzahl der Stege bezeichnet, die in einem durch die Verbindung der in die schlitzförmigen Nuten eingeführten Wicklungen bestimmten magnetischen Pol enthalten sind, und "$H_{CB}$" einen vertikalen Querschnittsbereich eines hinteren Kernabschnitts des geschichteten Kerns bezeichnet, der sich entlang einer diametralen Linie des hinteren Kernabschnitts von den Unterseiten (32a) der schlitzförmigen Nuten (32) zu den Unterseiten der Kerneingriffsnuten (33) erstreckt (Fig. 4).

4. Elektrische Rotationsmaschine nach Anspruch 1, bei der jedes der ringförmigen Einfassungselemente der Rotoreinfassung eine Dicke von 30 bis 90 mm aufweist.

5. Elektrische Rotationsmaschine nach Anspruch 4, bei der die Einfassungselemente (21) derart axial zum Rotor geschichtet sind, daß erste Luftkanäle (27) so zwischen zwei aneinandergrenzenden Einfassungselementen ausgebildet sind, daß radial Luft hindurchströmt, wobei die Kernplatten (31) derart geschichtet sind, daß zweite Luftkanäle (35) im wesentlichen mit den ersten Luftkanälen (27) abschließend ausgebildet sind.

6. Elektrische Rotationsmaschine nach Anspruch 5, bei der die Rotoreinfassung (2) und der geschichtete Kern (3) jeweils Bohrungen (25 und 34) aufweisen, durch die Bolzen (23 und 41b) verlaufen, um die Rotoreinfassung und den geschichteten Kern in der Richtung von deren Schichtung bzw. Stapelung festzuklemmen, und die jeweils zusammentreffenden Bohrungen und die jeweils zusammentreffenden Paare von Einfassungseingriffsnute und Kerneingriffsnute, die den Verbindungsstift (8) aufnehmen, sind auf einer gemeinsamen radialen Linie (V) des Rotors angeordnet (Fig. 4).

7. Elektrische Rotationsmaschine nach Anspruch 6, die ferner Anlageplatten (24) umfaßt, die jeweils die Endflächen der in die Schichtungsrichtung gerichteten Rotoreinfassung halten, sowie Endflächen des geschichteten Kerns, die in seine Schichtungsrichtung zeigen, wobei jedes der am weitesten zum Ende hin gelegenen Einfassungselemente (21), die jeweils an den Anlageplatten (24) anliegen, an seinem äußeren Randbereich einen Entlastungsabschnitt aufweist, so daß in der Schichtungsrichtung Druckkräfte auf den geschichteten Kern (3) einwirken können, wenn die Rotoreinfassung (2) von durch Klemmplatten (22) laufenden Bolzen (23) festgeklemmt werden, wobei ein äußerer radialer Rand des Kontaktbereichs zwischen der Rotoreinfassung (2) und jeder der Anlageplatten (24) als ein Drehpunkt dient.

8. Elektrische Rotationsmaschine nach Anspruch 7, bei der ein äußerer Umfangsabschnitt (22a) der Klemmplatte (22) einen inneren Umfangsabschnitt einer Spulenklammer (41) überlappt, mit diesem in Eingriff steht und durch die Bolzen festgeklemmt ist.

9. Elektrische Rotationsmaschine nach einem der Ansprüche 1 bis 8, bei der die Armabschnitte (14) des Armkreuzes (1) durch Schweißen an der Welle (11) befestigt sind, wobei die elektrische Rotationsmaschine von dem Typ mit variabler Drehzahl ist.

10. Hydroelektrische Stromerzeugungsanlage, die mit der elektrischen Rotationsmaschine nach Anspruch 9 vorgesehen ist und umfaßt:
eine Wasserturbine (51) mit einer koaxial mit der Welle des Rotors (50) verbundenen Welle (11); und
ein Axiallager (7), durch das der Rotor gehalten wird;
wobei der Rotor eine für die Wasserturbine erforderliche Schwungradwirkung aufweist und der Rotor mit einer Umfangsgeschwindigkeit von mindestens 100 m/sek drehbar ist.

11. Hydroelektrische Stromerzeugungsanlage nach Anspruch 10, bei der das Axiallager ist auf einer Zwischenwelle (52) vorgesehen ist, die zwischen der Welle der Wasserturbine und der Welle des Rotors angeordnet ist und diese verbindet.

12. Verfahren zur Herstellung einer elektrischen Rotationsmaschine mit einem Rotor (50) mit einer in der Mitte des Rotors (50) vorgesehenen im wesentlichen vertikalen Welle (11), einem an der Welle (11) befestigten und an einem äußeren Umfangsabschnitt des Rotors (50) angeordneten geschichteten Kern (3), und einer mit einem dielektrischen Material überzogenen Wicklung (4), die in in einem äußeren Rand-abschnitt des geschichteten Kerns (3) ausgebildete schlitzförmige Nuten (32) eingeführt wird, und einem Stator (5) mit einem Statorkern, der um den äußeren Rand des Rotors angeordnet ist, um dem Rotor gegenüberzuliegen, wobei zwischen ihnen ein Spalt ausgebildet ist, und einer auf dem Statorkern angeordneten Statorwicklung (6), wobei das Verfahren die folgenden Schritte umfaßt:
Schweißen von Armabschnitten (14) an die Welle (11), derart, daß sich die Armabschnitte (14) von der Welle radial nach außen erstrecken, wobei sie ein Armkreuz (1) bilden;
geschichtetes Anordnen von Einfassungselementen (21) aus einer ringförmigen dicken Stahlplatte in der Axialrichtung der Welle (11) und Befestigen der Einfassungselemente (21) an den entfernt liegenden Enden der Armabschnitte (14) des Armkreuzes (1) derart, daß Luftkanäle (27) zum radialen Durchströmen von Luft gebildet werden, wodurch eine Rotoreinfassung (2) gebildet wird, wobei das Einfassungselement (21) an seinem äußeren Rand in regelmäßigen Abständen ausgebildete Eingriffsnuten (26) aufweist; und

kreisförmiges Schichten fächerförmiger Kernplatten (31) um den äußeren Rand der Rotoreinfassung (2), um dadurch einen geschichteten Kern zu bilden, wobei jede der fächerförmigen Kernplatten (31) aus einer dünnen Stahlplatte gestanzt wird, wobei jede Kernplatte (31) an ihrem äußeren Rand die schlitzförmigen Ausparungen (32) und an ihrem inneren Rand jeweils den Einfassungseingriffsnuten (26) gegenüberliegende Kerneingriffsaussparungen (33) aufweist, wobei die Kernplatte (31) derartige Abmessungen aufweist, daß das folgende Verhältnis gegeben ist:

$$0{,}5{\cdot}L \leqq W \leqq 2{,}0{\cdot}L$$

wobei "W" die Breite (Länge) der fächerförmigen Kernplatte (31) entlang ihres äußeren Rands bezeichnet und "L" die Breite der fächerförmigen Kernplatte (31) zwischen ihrem inneren und ihrem äußeren Rand bezeichnet;
wobei der geschichtete Kern (3) derart beschaffen ist, daß das folgende Verhältnis gegeben ist:

$$0{,}5(Wt{\cdot}N_{SP}) \leqq H_{CB} \leqq 2{,}0(Wt{\cdot}N_{SP})$$

wobei "Wt" einen Bereich einer Randfläche eines zwischen zwei aneinandergrenzenden schlitzförmigen Nuten (32) liegenden Stegs (36) des geschichteten Kerns (3) bezeichnet, "$N_{SP}$" die Anzahl der Stege bezeichnet, die in einem durch die Verbindung der in die schlitzförmigen Nuten eingeführten Wicklungen bestimmten magnetischen Pol enthalten sind, und "$H_{CB}$" einen vertikalen Querschnittsbereich eines hinteren Kernabschnitts des geschichteten Kerns bezeichnet, der sich entlang einer diametralen Linie des hinteren Kernabschnitts von den Unterseiten (32a) der schlitzförmigen Nuten (32) zu den Unterseiten der Kerneingriffsnuten (33) erstreckt.

**Revendications**

1. Machine électrique tournante comprenant :
un rotor (50) comportant un arbre sensiblement vertical (11) prévu au centre dudit rotor, un noyau feuilleté (3) fixé audit arbre (11) et disposé sur une partie périphérique extérieure dudit rotor, un enroulement (4) recouvert d'un matériau diélectrique et inséré dans des rainures formant encoches (32) ménagées dans une partie périphérique extérieure dudit noyau feuilleté; et
un stator (5) comprenant un noyau disposé autour de la périphérie extérieure dudit rotor de manière à être situé en vis-à-vis dudit rotor en en étant séparé par un entrefer, et un enroulement statorique (6) monté sur ledit noyau du stator;

ledit rotor (50) comprenant un bras en croisillon (1) constitué par l'arbre (11) et des éléments de bras (14) qui sont montés fixes sur ledit arbre et s'étendent radialement vers l'extérieur à partir dudit arbre, et une jante annulaire (2) de rotor, montée fixe sur des extrémités distales desdits éléments de bras dudit bras en croisillon;

ledit noyau feuilleté (3) étant monté de façon fixe sur une périphérie extérieure de ladite jante (2) de rotor, ledit noyau feuilleté possédant des couches empilées, chacune desdites couches étant constituée par une pluralité de plaques minces de noyau en forme d'éventail (31) réalisées en acier et disposées selon une forme annulaire, tandis que lesdites rainures formant encoches (32) sont ménagées dans une périphérie extérieure de chaque plaque du noyau;

ladite jante (2) de rotor possédant des éléments de jante empilés (21) constitués chacun par une plaque d'acier annulaire épaisse (21), chaque élément de jante (21) comportant des rainures d'engagement (26) ménagées dans sa périphérie extérieure, à des intervalles identiques, ladite plaque (31) du noyau comportant des rainures d'engagement (33) situées respectivement en vis-à-vis desdites rainures d'engagement (26) de la jante, de telle sorte que le nombre de rainures d'engagement (33) du noyau terminé est égal à deux, et une clavette de raccordement (8) étant montée dans chaque couple de rainures appariées comprenant ladite rainure d'engagement (33) de noyau et ladite rainure d'engagement (26) de jante pour fixer ledit noyau feuilleté (3) à ladite jante (2) du rotor, ladite clavette de raccordement (8) s'étendant dans une direction axiale dudit rotor; et

la relation suivante étant établie :

$$0,5 \times L \leqq W \leqq 2,0 \times L$$

"W" représentant une largeur (longueur) de ladite plaque de noyau en forme d'éventail le long de sa périphérie extérieure, et "L" représentant une largeur de ladite plaque de noyau en forme d'éventail, entre ses périphéries intérieure et extérieure.

2. Machine électrique tournante selon la revendication 1, dans laquelle lesdites rainures d'engagement (33) de ladite plaque de noyau sont définies par deux demi-rainures (33a) ménagées respectivement sur des côtés périphériques opposés de ladite plaque de noyau en forme d'éventail (31) et par une rainure complète (33b) prévue dans une partie centrale de ladite plaque de noyau (figure 5).

3. Machine électrique tournante selon la revendication 2, dans laquelle la relation suivante est établie :

$$0,5 \ (W_t \times N_{SP}) \leqq H_{CB} \leqq 2,0 \ (W_t \times N_{SP})$$

"Wt" représentant une aire d'une surface périphérique d'une dent (36) dudit noyau feuilleté (3) située entre deux rainures formant encoches adjacentes (32), "$N_{SP}$" représentant un nombre desdites dents incluses dans un pôle magnétique défini par la connexion desdits enroulements insérés dans lesdites rainures formant encoches, et "$H_{CB}$" représentant une aire en coupe transversale verticale d'une partie arrière dudit noyau feuilleté, qui s'étend depuis des fonds (32a) desdites rainures formant encoches (32) jusqu'à des fonds desdites rainures d'engagement (33) du noyau, le long d'un diamètre de ladite partie arrière du noyau (figure 4).

4. Machine électrique tournante selon la revendication 1, dans laquelle chacun desdits éléments annulaires de ladite jante de rotor possède une épaisseur comprise entre 30 et 90 mm.

5. Machine électrique tournante selon la revendication 4, dans laquelle lesdits éléments de jante (21) sont empilés dans la direction axiale dudit rotor de telle sorte que des premiers conduits d'air (27) sont formés entre deux éléments adjacents de jante de manière à permettre un passage radial de l'air, lesdites plaques de noyau (31) étant empilées de telle sorte que des seconds conduits d'air (35) sont formés dans des positions sensiblement alignées avec lesdits premiers conduits d'air (27).

6. Machine électrique tournante selon la revendication 5, dans laquelle ladite jante (2) de rotor et ledit noyau feuilleté (3) possèdent des trous respectifs (25 et 34), que traversent des boulons (23 et 41b) pour serrer ladite jante de rotor et ledit noyau feuilleté, dans la direction dans laquelle ils sont empilés, et des trous appariés parmi lesdits trous et chaque couple de rainures appariées formées par ladite rainure d'engagement de jante et ladite rainure d'engagement de noyau logeant ladite clavette de raccordement (8) étant disposés sur une ligne radiale commune (V) dudit rotor (figure 4).

7. Machine électrique tournante selon la revendication 6, comportant en outre des plaques de butée (24) retenant respectivement des surfaces d'extrémité de ladite jante de rotor, dirigées dans la direction d'empilement de cette jante, ainsi que des surfaces d'extrémité dudit noyau feuilleté, dirigées dans la direction d'empilement du noyau, chacun des éléments les plus extrêmes parmi lesdits éléments de jante (21) en butée respectivement contre lesdites plaques de butée (24) possédant un évidement au niveau de sa partie périphérique extérieure, de sorte que, lorsque ladite jante de rotor (2) est serrée par des boulons (23) moyennant l'interposition de plaques de serrage (22), des forces de compression peuvent être appliquées audit noyau feuilleté (3), dans sa direction d'empilement, une périphérie, extérieure du point de vue radial, de la zone de contact entre ladite zone de rotor (2) et chacune desdites plaques de butée (24) étant utilisée comme pivot.

8. Machine électrique tournante selon la revendication 7, dans laquelle une partie périphérique extérieure (22a) de ladite plaque de serrage (22) chevauche et s'applique sur une partie périphérique intérieure d'une attache de bobine (41) et est serrée par lesdits boulons.

9. Machine électrique tournante selon l'une quelconque des revendications 1 à 8, dans laquelle lesdits éléments de bras (14) dudit bras en croisillon (1) sont fixés audit arbre (11) par soudage, ladite machine étant du type à vitesse variable.

10. Centrale hydroélectrique équipée de ladite machine tournante électrique selon la revendication 9, comprenant :

une turbine hydraulique (51) possédant un arbre (53) raccordé axialement audit arbre (11) dudit rotor (50); et

un palier de butée (7), dans lequel ledit rotor est supporté;

ledit rotor ayant un effet de volant requis par ladite turbine hydraulique, ledit rotor pouvant tourner à une vitesse périphérique d'au moins 100 m/s.

11. Centrale hydroélectrique selon la revendication 10, dans laquelle ledit palier de butée est prévu sur un arbre intermédiaire (52), qui est disposé entre et relie ledit arbre de ladite turbine hydraulique et ledit arbre dudit rotor.

12. Procédé pour fabriquer une machine tournante électrique comprenant un rotor (50) comportant un arbre sensiblement vertical (11) prévu au centre dudit rotor, un noyau feuilleté (3) fixé audit arbre (11) et disposé sur une partie périphérique extérieure dudit rotor, un enroulement (4) recouvert d'un matériau diélectrique et inséré dans des rainures formant encoches (32) ménagées dans une partie périphérique extérieure dudit noyau feuilleté; et un stator (5) comprenant un noyau disposé autour de la périphérie extérieure dudit rotor de manière à être situé en vis-à-vis dudit rotor en en étant séparé par un entrefer, et un enroulement statorique (6) monté sur ledit noyau du stator; ledit procédé comprenant les étapes consistant à :

souder des éléments de bras (14) sur ledit arbre (11) de manière que lesdits éléments de bras (14) s'étendent radialement vers l'extérieur à partir dudit arbre en formant un bras en croisillon (1);

empiler des éléments de jante (21) formés d'une plaque d'acier annulaire épaisse, dans une direction axiale dudit arbre (11) et fixer lesdits éléments de jante (21) à des extrémités distales desdits éléments (14) dudit bras en croisillon (1) de manière à former des conduits d'air (27) pour un passage radial d'air dans ces conduits, en formant de ce fait une jante de rotor (2), ledit élément de jante (21) possédant des rainures d'engagement (26) formées sur sa périphérie extérieure à des intervalles égaux; et

empiler des plaques de noyau en forme d'éventail (31) selon une disposition annulaire autour d'une périphérie extérieure de ladite jante de rotor (2) pour former de ce fait un noyau feuilleté, chacune desdites plaques de noyau en forme d'éventails (31) étant formée par emboutissage à partir d'une plaque de tôle mince, chacune desdites plaques de noyau (31) comportant, sur sa périphérie extérieure, des rainures formant encoches (32) et comportant, sur sa périphérie intérieure, des rainures d'engagement (33) de noyau, qui sont situées respectivement en vis-à-vis desdites rainures d'engagement (26) de jante, ladite plaque de noyau (31) possédant des dimensions aptes à satisfaire à la relation suivante :

$$0,5 \times L \leqq W \leqq 2,0 \times L$$

"W" représentant une largeur (longueur) le long de la périphérie extérieure de ladite plaque de noyau en forme d'éventail (31) et "L" représentant une largeur de ladite plaque de noyau en forme de noyau (31), entre lesdites périphéries intérieure et extérieure de cette plaque;

ledit noyau feuilleté (3) étant agencé de manière à satisfaire à la relation suivante :

$$0,5 \ (Wt \times N_{SP}) \leqq H_{CB} \leqq 2,0 \ (Wt \times N_{SP})$$

"WT" représentant une aire d'une surface périphérique d'une dent (36) dudit noyau feuilleté (3) située entre deux rainures formant encoches adjacentes (32), "$N_{SP}$" représentant un nombre desdites dents incluses dans un pôle magnétique défini par la connexion desdits enroulements insérés dans lesdites rainures formant encoches, et "$H_{CB}$" représentant une aire en coupe transversale verticale d'une partie arrière dudit noyau feuilleté, qui s'étend depuis des fonds (32a) desdites rainures formant encoches (32) jusqu'à des fonds desdites rainures d'engagement (33) de noyau, le long d'un diamètre de ladite partie arrière du noyau.

# FIG. I

# FIG. 2

# FIG. 3

# FIG. 4

FIG. 5

EP 0 414 129 B1

# FIG. 6

W

W

L=2W

W

31C

31CG

31DG

31D

Y

33a

33a

33b

# FIG. 7

220

221

210

212

208

205

215

207

206

212

214

213

202

211

203

204

201

209

B

A

24